# EUROPÄISCHE PATENTSCHRIFT

(11) **EP 2 781 370 B1**
(45) Veröffentlichungstag und Bekanntmachung des Hinweises auf die Patenterteilung: **30.09.2015**
(21) Anmeldenummer: 14150522.2
(22) Anmeldetag: 09.01.2014
(51) Int. Cl.: B60C 9/18, B60C 9/00, B60C 15/04, B60C 9/14

(54) **Festigkeitsträgerlage für Fahrzeugluftreifen**
Stability support layer for pneumatic vehicle tires
Couche de renfort pour pneus de véhicules

(30) Priorität: 21.03.2013 DE 102013102894
(43) Veröffentlichungstag der Anmeldung: 24.09.2014
(73) Patentinhaber: Continental Reifen Deutschland GmbH, 30165 Hannover (DE)
(72) Erfinder: Justine, Carole, 31535 Scharrel (DE); Krüger, Jörn, 66399 Mandelbachtal (DE); Kramer, Thomas, 32049 Herford (DE)
(74) Vertreter: Finger, Karsten

(56) Entgegenhaltungen:
- WO-A1-2012/038393
- DE-A1- 1 680 489

## Beschreibung

Die Erfindung betrifft eine Festigkeitsträgerlage für Fahrzeugluftreifen, wobei die Festigkeitsträgerlage zumindest einen Festigkeitsträger aufweist, welcher in elastomeres Material eingebettet ist, wobei der Festigkeitsträger ein Band ist, dessen Querschnitt der Bedingung h < w entspricht, wobei h die Querschnittshöhe und w die Querschnittsbreite des Bandes definiert, wobei das Band eine Folie aufweist, wobei die Folie aus einem nicht-metallischen Material besteht, und wobei das Band in der Festigkeitsträgerlage derart angeordnet ist, dass die Erstreckungsrichtung von w in etwa parallel zur flächigen Erstreckung der Festigkeitsträgerlage ausgerichtet ist. Ferner betrifft die Erfindung einen Fahrzeugluftreifen, enthaltend zumindest eine solche Festigkeitsträgerlage der Gürtelbandage und/oder der Karkasse und/oder der Wulstverstärkung.

Festigkeitsträgerlagen für elastomere Erzeugnisse, insbesondere für die Karkasse, die Gürtelbandage und/oder die Wulstverstärkung von Fahrzeugluftreifen, sind dem Fachmann in Material und Aufbau in unterschiedlichen Ausführungen bekannt. Der mindestens eine Festigkeitsträger dieser Festigkeitsträgerlage wird hierbei, z.B. durch Kalandrieren, in eine Elastomermischung eingebettet, um als Festigkeitsträgerlage im Elastomerprodukt eingesetzt werden zu können. Es ist bekannt und üblich, für die Festigkeitsträger von Festigkeitsträgerlagen von Fahrzeugreifen, insbesondere für die Festigkeitsträgerlagen der Karkasse und/oder der Gürtelbandage und/oder der Wulstverstärkung, Garne oder Korde zu verwenden, welche einen im Wesentlichen runden Querschnitt aufweisen.

Die Reifenentwicklung geht dahin, Fahrzeugluftreifen mit geringem Rollwiderstand bereitzustellen.

Es hat sich herausgestellt, dass die Höhe der Festigkeitsträgerlagen von Fahrzeugreifen großen Einfluss auf den Rollwiderstand des Fahrzeugluftreifens hat. Die Höhe einer Festigkeitsträgerlage wird im Wesentlichen durch die Querschnittshöhe h des zumindest einen Festigkeitsträgers der Festigkeitsträgerlage sowie die Dicke der Elastomerschicht, welche den Festigkeitsträger ummantelt, bestimmt. Eine Reduzierung der Höhe einer Festigkeitsträgerlage durch Reduzierung der Höhe des Festigkeitsträgers und/oder Reduzierung der Dicke der ummantelnden Elastomerschicht bedingt eine geringere Hysterese und somit eine Verbesserung des Rollwiderstandes, insbesondere durch die mit der reduzierten Höhe einhergehende Reduzierung des eingesetzten Materials. Die Reduzierung insbesondere von elastomerem Material wirkt sich auch über die Gewichtsreduzierung positiv auf den Rollwiderstand aus. Für die ummantelnde Elastomerschicht ist eine Mindestschichtdicke erforderlich. Oftmals ist diese Mindestschichtdicke schon erreicht. Eine Verbesserung des Rollwiderstandes durch Reduzierung der Höhe der Festigkeitsträgerlagen ist somit beim Einsatz der üblichen Festigkeitsträger mit rundem Querschnitt schwierig, da auch der Durchmesser, also die Querschnittshöhe, der Festigkeitsträger durch die geforderten Materialeigenschaften, wie beispielsweise der Festigkeit, nach unten hin begrenzt ist.

Die DE 1680489 offenbart einen Fahrzeugluftreifen mit zumindest einer Kunststofffolie als Verstärkung zwischen Karkasse und Laufstreifen, wobei die Kunststofffolie in etwa die Breite des Laufstreifens aufweist. Als Materialien werden Polyester und Polyamide genannt.

Die WO 2012/03893 A1 offenbart einen Fahrzeugluftreifen mit einem Laufstreifen aufweisend zumindest zwei Umfangsrille und mit einer Verstärkung zwischen Karkasse und Laufstreifen, welche zumindest ein Multi-Schicht Laminat, welches zumindest eine multiaxial verstreckte thermoplastischen Polymerfilm beinhaltet, aufweist. Das Laminat erstreckt sich in axialer Richtung zumindest über die axiale Ausdehnung zweier Umfangsrillen.

Aus der US 2012/0090755 A1 ist ein Fahrzeugluftreifen bekannt, der mindestens eine Festigkeitsträgerlage des Gürtels, der Karkasse und der Gürtelbandage enthält und dessen Gürtel durch mindestens eine Festigkeitsträgerlage, beinhaltend Festigkeitsträger aus einem Polymermaterial, die mit der Umfangsrichtung des Reifens einen Winkel von 10 Grad bis 80 Grad einschließen und einen Querschnitt mit h < w aufweisen, verstärkt ist. Die Querschnittshöhe ist hierbei geringer als der Durchmesser der für eine solche Festigkeitsträgerlage üblichen Festigkeitsträger runden Querschnitts. Somit ist auch die Höhe der Festigkeitsträgerlage verringert. Die Offenbarung schweigt sich über die Eignung einer Verwendung besagter Festigkeitsträgerlagen für die Karkasse, die Gürtelbandage oder die Wulstverstärkung eines Fahrzeugluftreifens aus.

Der vorliegenden Erfindung liegt die Aufgabe zu Grunde, eine Festigkeitsträgerlage für Fahrzeugluftreifen bereitzustellen, durch welche der Rollwiderstand des Fahrzeugluftreifens weiter verbesserbar ist.

Die Aufgabe wird gelöst, indem die Festigkeitsträgerlage eine Festigkeitsträgerlage der Gürtelbandage und/oder der Karkasse und/oder der Wulstverstärkung eines Fahrzeugluftreifens ist, indem das nicht-metallische Material der Folie enthalten ist in der Gruppe bestehend aus Polyestern und/oder Polyetherketonen und/oder Polyketonen und/oder Rayon und/oder Viskose und/oder Naturfasermaterialien und/oder Glas und/oder Karbon und/oder Polyoxadiazolen und/oder Flüssigkristallpolymeren und/oder Polyisoprenen und/oder Polybutadienen und/oder Polyisobutylenen und/oder Polychloroprenen und/oder Polyacrylaten und/oder Polyglucanen und/oder Polyurethanen und/oder Polysulfiden und/oder Silikonen und/oder Polyvinylchloriden und/oder Epxoidharzen und/oder Polyetherestern und/oder Ethylen-Propylen-Copolymeren und/oder Styrol-Butadien-Copolymeren und/oder Acrylnitril-Butadien-Copolymeren und/oder Ispren-Isobutylen-Copolymeren und/oder Mischungen und/oder Derivaten dieser Materialien und indem die Querschnittsbreite w des Bandes der Bedingung 100 µm < w < 30000 µm, bevorzugt 300 µm < w < 10000 µm, genügt, und dass das Verhältnis von Querschnittsbreite w zu Ouerschnittshöhe h die Bedingung 4000 > w/h > 1.5, insbesondere 500 > w/h > 10, insbesondere 200 > w/h > 40, erfüllt.

Bei den Polyestern (PE) kann es sich insbesondere um die Polyester Polyethylennaphthalat (PEN) und/oder Polyethylenfuranoat (PEF) und/oder Polybutylenterephthalat (PBT) und/oder Polybutylennaphttalat (PBN) und/oder Polypropylenterephthalat (PPT) und/oder Polypropylennaphthalat (PPN) und/oder Polyethylenterephthalat (PET) und/oder Polymilchsäure und/oder Polycarbonate und/oder High-Modulus Low-Shrinkage-PET (HMLS-PET), insbesondere um thermoplastische Polyester und/oder vernetzte ungesättigte Polyester, handeln. Bei FKP kann es sich insbesondere um das unter dem Handelsnamen "Vectran" (Kuraray) erhältliche Erzeugnis handeln.

Überraschenderweise eignen sich diese flachen Bänder als Festigkeitsträger für Festigkeitsträgerlagen der Gürtelbandage und/oder der Karkasse und/oder der Wulstverstärkung eines Fahrzeugluftreifens. Trotz der geringen Höhe der Bänder kann somit eine Festigkeitsträgerlage zur Verfügung gestellt werden, welche die Anforderungen an eine Festigkeitsträgerlage der Karkasse, beispielsweise eine hohe Bruchdehnung sowie ein stark von der Position im Reifen abhängender Arbeitspunkt bzgl. Last und Spannung, oder die Anforderungen an eine Gürtelbandage, beispielsweise ein positives Schrumpfverhalten, erfüllt.

Bedeutend ist hierbei, dass durch den Einsatz von Bändern mit sehr flachem Querschnitt eine Festigkeitsträgerlage der Karkasse und/oder der Gürtelbandage und/oder der Wulstverstärkung mit geringer Höhe bereitgestellt wird. Bedeutend ist hierbei, dass das Band in Erstreckungsrichtung der Bandbreite w in etwa parallel zur Erstreckungsrichtung der Festigkeitsträgerlage ist. Hierdurch ist die Festigkeitsträgerlage sehr dünn ausführbar und dünner als beispielsweise bei Verwendung von Festigkeitsträgern mit gleicher Querschnittsfläche aber rundem Querschnitt.

Durch die geringe Querschnittshöhe h des zumindest einen Festigkeitsträgers ist die Höhe der Festigkeitsträgerlage der Karkasse und/oder der Gürtelbandage und/oder der Wulstverstärkung reduziert. Dies bedingt eine geringere Hysterese des Fahrzeugluftreifens. Auch durch die Einsparung an elastomerem Material sowie an Festigkeitsträgermaterial sind Hysterese sowie Gewicht reduziert. Beim Einsatz in Fahrzeugluftreifen kann somit ein weiter verringerter Rollwiderstand erwirkt werden.

Der Querschnitt des Bandes weist eine sehr flache Form auf. Querschnittshöhe h und Querschnittsbreite w sind entlang der Erstreckungslänge des Bandes weitgehend konstant, können aber im Rahmen von Toleranzen variieren. Die flächige Erstreckung der mindestens einen Folie des Bandes erstreckt sich im Wesentlichen über die gesamte flächige Erstreckung des Bandes.

Im Querschnitt der Festigkeitsträgerlage sind die Festigkeitsträger in etwa parallel zueinander ausgerichtet. Hierbei kann es sich um mindestens zwei Festigkeitsträger handeln, die parallel zueinander ausgerichtet sind, oder um einen Festigkeitsträger, der parallel zueinander ausgerichtete Abschnitte aufweist. Beispielsweise kann es sich hierbei um einen Festigkeitsträger der Festigkeitsträgerlage der Gürtelbandage eines Fahrzeugluftreifens handeln, der in etwa parallel zur Umfangsrichtung des Fahrzeugluftreifens mit mehr als zwei Umwicklungen um einen Bereich des Gürtels entlang der axialen Breite gewickelt ist. Die Festigkeitsträger können überlappend, insbesondere mit einem Überlapp c < w/2, beabstanded, insbesondere mit einem in der Längserstreckung des Querschnittes der Festigkeitsträgerlage definierten Abstand d, welcher die Bedingung d < w erfüllt, oder zumindest abschnittsweise berührend, also mit einem Abstand d, der zumindest abschnittsweise die Bedingung d=0 erfüllt, angeordnet sein.

Die mindestens eine Folie des Bandes kann, aber muss nicht, mehrachsig vorgestreckt sein.

Die Eigenschaften des verwendeten Bandes, beispielsweise in Hinblick auf Festigkeit, Elastizitätsmodul oder Bruchdehnung, Ermüdung, Hafteigenschaften oder Hysterese, sind vom Fachmann in bekannter und angemessener Weise den geforderten Anfordernissen der entsprechenden Festigkeitsträgerlage, insbesondere von Karkasse, Gürtelbandage und/oder Wulstverstärkung, anzupassen.

Vorteilhaft ist weiter, dass die erfindungsgemäße Festigkeitsträgerlage in Aufbau und Einsatz sehr ähnlich zu üblichen Festigkeitsträgerlagen von Fahrzeugluftreifen ist, wodurch die Gesamtkonstruktion des Reifens weitgehend unverändert bleiben kann, wodurch eventuell nachteilige Effekte einer Veränderung der Gesamtkonstruktion vermieden werden.

Ein weiterer Vorteil besteht darin, dass die Verarbeitung von Bändern der beschriebenen Art zu Festigkeitsträgerlagen von elastomeren Erzeugnissen weitgehend analog zur Verarbeitung von herkömmlichen Festigkeitsträgern mit rundem Querschnitt erfolgen kann. Somit ist bei der Herstellung von Fahrzeugluftreifen nur eine minimale Anpassung der Produktionsschritte und/oder der Produktionsmaschinen erforderlich.

Es ist zweckmäßig, wenn das Band aus genau einer Folie gebildet ist. Hierdurch kann eine Festigkeitsträgerlage der Karkasse und/oder der Gürtelbandage und/oder der Wulstverstärkung eines Fahrzeugluftreifens bereitgestellt werden, durch welche der Rollwiderstand des Fahrzeugluftreifens weiter verbesserbar ist.

Es ist zweckmäßig, wenn das Band aus einer Folie aus Polyester (PE), insbesondere aus Polyethylennaphthalat (PEN) oder Polyethylenterephthalat (PET), gebildet ist. Bei dem Polyester kann es sich insbesondere auch um die Polyester Polybutylenterephthalat (PBT), Polybutylennaphttalat (PBN), Polpropylenterephthalat (PPT), Polypropylennaphthalat (PPN) oder High-Modulus Low-Shrinkage-PET (HMLS-PET), insbesondere um thermoplastische Polyester oder vernetzte ungesättigte Polyester, handeln. Durch Einsatz spezieller Polyester können die Eigenschaften der Festigkeitsträger der Festigkeitsträgerlage optimiert werden.

Es ist zweckmäßig, wenn das Band ein Laminat enthaltend mindestens eine Folie sowie mindestens eine flächige Schicht, insbesondere ein Laminat enthaltend mindestens eine Polyesterfolie oder eine Polyimidfolie sowie mindestens eine flächige Schicht aus Aramidpapier, ist. Die Folie und die flächige Schicht erstrecken sich hierbei jeweils im Wesentlichen über die gesamte flächige Erstreckung des Bandes. Sie können insbesondere unmittelbar übereinander angeordnet sein. Das Laminat enthält somit neben einer Folie aus einem Material aus obig genannter Gruppe mindestens eine flächige Schicht. Die flächige Schicht kann eine Folie sein. Das Material dieser Folie kann, aber muss nicht, in obig genannter Gruppe enthalten sein. Es kann insbesondere ein aliphatisches Homopolyamid (PA), insbesondere PA 6.6, sein. Die flächige Schicht kann auch aus dem flächigen Werkstoff Papier, der sich dadurch auszeichnet, dass er im Wesentlichen aus Fasern besteht, sein, und somit verschieden zu einer Folie sein. Bei dem Papier kann es sich insbesondere um Aramidpapier handeln. Das Aramidpapier bildet vorzugsweise eine oder zwei Schichten des Laminats. Die Folie und/oder die flächige Schicht kann kalandriert sein. Aramidpapier ist beispielsweise unter dem Handelsnamen "Nomex" (Coveme) erhältlich. Die Polyimidfolie kann das unter dem Handelsnamen "Kapton" (Coveme) erhältliche Produkt sein. Entsprechende Laminate sind unter dem Handelsnamen "DyTerm" (Coveme) erhältlich. Durch die Kombination mehrerer Materialien können positive Eigenschaften der Materialien kombiniert und die Eigenschaften des Bandes gezielt eingestellt werden.

Zweckmäßig ist es, wenn die Querschnittshöhe h des Bandes der Bedingung 10 µm < h < 1500 µm, vorzugsweise 30 µm < h < 800 µm, bevorzugt 40 µm < h < 400 µm, entspricht. Der Fahrzeugluftreifen, der solche Festigkeitsträger in Festigkeitsträgerlagen der Gürtelbandage und/oder der Karkasse und/oder der Wulstverstärkung aufweist, ist besonders in Bezug auf den Rollwiderstand bei guten übrigen Eigenschaften des Reifens verbessert.

Um eine zuverlässige Haftung des Festigkeitsträgers zum elastomeren Material zu gewährleisten, ist es zweckmäßig, den Festigkeitsträger mit einer Haftimprägnierung, z.B. mit einem RFL-Dip im 1- oder 2-Bad-Verfahren, zu versehen.

Vorteilhaft ist es, wenn die Festigkeitsträgerlage zumindest zwei in Material und/oder Aufbau unterschiedliche Festigkeitsträger aufweist. Dabei kann es sich um Bänder handeln, die sich in der Bandbreite w und/oder der Bandhöhe h und/oder dem Material und/oder dem Bandaufbau unterscheiden. Es kann ein Band aus einer Folie mit einem Band aus einem Laminat kombiniert werden. Die Festigkeitsträgerlage kann beispielsweise neben mindestens einem Band aus PEN-Folie mindestens ein weiteres Band aus PET-Folie enthalten. Die Festigkeitsträgerlage kann beispielsweise neben mindestens einem Band enthaltend eine Folie aus einem nicht-metallischen Material aus obig genannter Gruppe mindestens ein weiteres Band aufweisen, das eine Folie aus einem hierzu verschiedenen Material enthält. Dieses Material kann, aber muss nicht, in obig genannter Gruppe enthalten sein. Das Material kann beispielsweise ein aliphatisches Homopolyamid, insbesondere PA 4.6, PA6, PA 6.6, PA 10.10, PA 11 oder PA12, sein. Die Festigkeitsträgerlage kann auch neben mindestens einem Band enthaltend mindestens eine Folie aus einem nicht-metallischen Material aus obig genannter Gruppe mindestens einen anderen dem Fachmann bekannten Festigkeitsträger enthalten. Bei der so geschaffenen Festigkeitsträgerlage können beispielsweise Bänder aus PET mit Korden aus Rayon kombiniert werden. Die Anordnung der unterschiedlichen Festigkeitsträger in der Festigkeitsträgerlage kann alternierend erfolgen. Durch die Verwendung unterschiedlicher Festigkeitsträger können die Vorteile der einzelnen Festigkeitsträger kombiniert werden.

Die Erfindung umfasst insbesondere einen Fahrzeugluftreifen, der zumindest eine erfindungsgemäße Festigkeitsträgerlage der Gürtelbandage und/oder der Karkasse und/oder der Wulstverstärkung enthält. Es handelt sich dabei vorzugsweise um einen PKW-Reifen oder einen Nutzfahrzeugreifen.

In einer vorteilhaften Ausführung beim Einsatz in Fahrzeugluftreifen orientiert sich die Erstreckungsrichtung und Länge der erfindungsgemäßen Festigkeitsträgerlagen sowie die Anordnung der darin enthaltenen Festigkeitsträger an den für Fahrzeugluftreifen üblichen Festigkeitsträgerlagen sowie Festigkeitsträgern. Eine übliche Festigkeitsträgerlage kann dabei auch durch zwei oder mehr erfindungsgemäße Festigkeitsträgerlagen ersetzt werden. In einer weiteren vorteilhaften Ausführung ist die Oberfläche des Bandes zur Steigerung der Haftung zwischen Band und Haftimprägnierung oder Band und elastomerem Material mechanisch, physikalisch und/oder chemisch aktiviert.

Weitere Merkmale, Vorteile und Einzelheiten der Erfindung werden nun anhand der Figuren, die schematische Ausführungsbeispiele darstellen, näher beschrieben. Dabei zeigt die:
Fig. 1 einen Teilradialschnitt durch einen Fahrzeugluftreifen;
Fig. 2 einen Querschnitt durch einen Abschnitt einer Festigkeitsträgerlage 13 gemäß der Erfindung;
Fig. 3 einen Querschnitt durch einen Abschnitt einer anderen Festigkeitsträgerlage 13 gemäß der Erfindung;
Fig. 4 einen Querschnitt durch einen Abschnitt einer weiteren Festigkeitsträgerlage 13 gemäß der Erfindung.

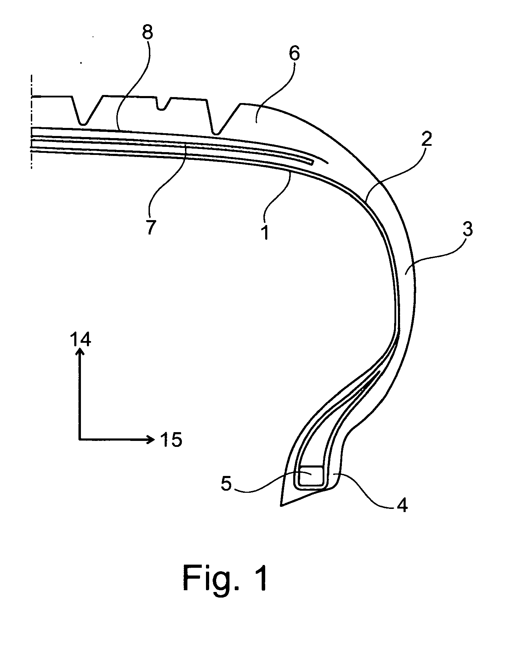

Die Fig. 1 zeigt die rechte Hälfte eines Querschnittes durch einen Fahrzeugluftreifen für einen Personenkraftwagen. Die wesentlichen Bauteile, aus welchen sich der dargestellte Fahrzeugluftreifen zusammensetzt, sind eine weitgehend luftundurchlässige Innenschicht 1, eine zumindest eine Festigkeitsträgerlage 13 beinhaltende Karkasse 2, die in herkömmlicher Weise vom Zenitbereich des Fahrzeugluftreifens über die Seitenwände 3 bis in die Wulstbereiche 4, enthaltend mindestens eine Festigkeitsträgerlage 13 als Wulstverstärkung, reicht und dort durch Umschlingen zugfester Wulstkerne 5 verankert ist, einen radial oberhalb der Karkasse 2 befindlichen profilierten Laufstreifen 6 und einen zwischen dem Laufstreifen 6 und der Karkasse 2 angeordneten, zwei Festigkeitsträgerlagen 13 beinhaltenden Gürtel 7, welcher in herkömmlicher Weise radial außen mit der Festigkeitsträgerlage 13 der Gürtelbandage 8 abgedeckt ist.

Bei Fahrzeugluftreifen in wie in Fig. 1 gezeigter radialer Bauart sind die Festigkeitsträger der Festigkeitsträgerlage 13 der Karkasse 2 in etwa parallel zueinander in etwa in radialer Richtung 14 angeordnet. Die Festigkeitsträgerlage 13 der Gürtelbandage 8 beinhaltet einen Festigkeitsträger, der kontinuierlich entlang der axialen Breite gewickelt ist.

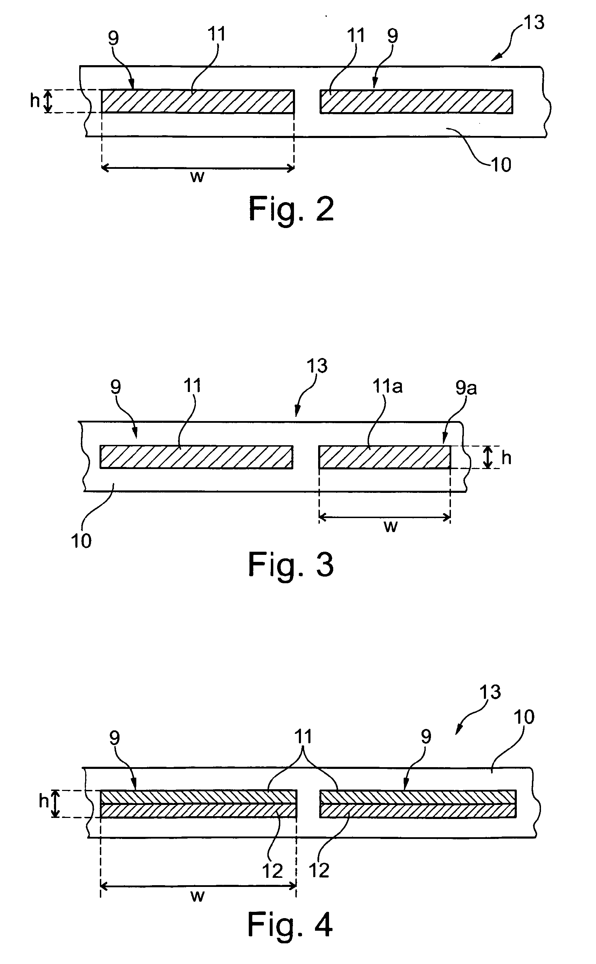

Die Figuren 2 bis 4 zeigen jeweils einen Querschnitt durch einen Abschnitt einer erfindungsgemäßen Festigkeitsträgerlage 13, beinhaltend zwei Bänder 9 als Festigkeitsträger, welche in elastomeres Material 10 eingebettet sind. Die Querschnittsebene steht hierbei senkrecht zur Längserstreckungsrichtung der Bänder 9.

In Figur 2 sind die Bänder 9 aus jeweils genau einer Folie 11 aus PEN gebildet. Die Querschnittshöhe h genügt der Bedingung h = 50 µm, das Verhältnis von Querschnittsbreite w zu Querschnittshöhe h genügt der Bedingung w/h = 120. Die Bänder 9 sind mit einem RFL-Dip zur Haftimprägnierung versehen.

Die in Fig. 3 dargestellte Festigkeitsträgerlage 13 unterscheidet sich von der Festigkeitsträgerlage 13 in Fig. 2 darin, dass die Folie 11a des rechten Bandes 9a der in Fig. 3 dargestellten Bänder 9 aus PET gebildet ist und eine Querschnittsbreite w, welche der Bedingung w/h = 60 genügt, aufweist.

Die Festigkeitsträger 9 der in Fig. 4 dargestellten Festigkeitsträgerlage 13 sind ein Laminat aus einer Folie 11 aus Polyesterfolie und einer flächigen Schicht 12 aus Aramidpapier. Das Laminat weist eine Querschnittshöhe h von h = 100 µm sowie eine Querschnittsbreite w, welcher der Bedingung w/h = 60 genügt, auf. Die Bänder 9 sind mit einem RFL-Dip zur Haftimprägnierung versehen.

### Bezugszeichenliste

### (Teil der Beschreibung)

- 1: Innenschicht
- 2: Karkasse
- 3: Seitenwand
- 4: Wulstbereich
- 5: Wulstkern
- 6: Laufstreifen
- 7: Gürtel
- 8: Gürtelbandage
- 9: Band
- 9a: Band
- 10: elastomeres Material
- 11: Folie
- 11a: Folie
- 12: flächige Schicht
- 13: Festigkeitsträgerlage
- 14: radiale Richtung
- 15: axiale Richtung
- h: Querschnittshöhe des Bandes
- w: Querschnittsbreite des Bandes

## Patentansprüche

1. Festigkeitsträgerlage (13) für Fahrzeugluftreifen, wobei die Festigkeitsträgerlage (13) zumindest einen Festigkeitsträger aufweist, welcher in elastomeres Material (10) eingebettet ist, wobei der Festigkeitsträger ein Band (9) ist, dessen Querschnitt der Bedingung h < w entspricht, wobei h die Querschnittshöhe und w die Querschnittsbreite des Bandes (9) definiert, wobei das Band (9) eine Folie (11) aufweist, wobei sich die Folie (11) über die gesamte Erstreckungsfläche des Bandes (9) erstreckt, wobei die Folie (11) aus einem nicht-metallischen Material besteht, und wobei das Band (9) in der Festigkeitsträgerlage (13) derart angeordnet ist, dass die Erstreckungsrichtung von w in etwa parallel zur flächigen Erstreckung der Festigkeitsträgerlage (13) ausgerichtet ist,
**dadurch gekennzeichnet, dass**
die Festigkeitsträgerlage (13) eine Festigkeitsträgerlage der Gürtelbandage (7) und/oder der Karkasse (2) und/oder der Wulstverstärkung eines Fahrzeugluftreifens ist, dass das nicht-metallische Material der Folie (11) enthalten ist in der Gruppe bestehend aus Polyestern und/oder Polyetherketonen und/oder Polyketonen und/oder Rayon und/oder Viskose und/oder Naturfasermaterialien und/oder Glas und/oder Karbon und/oder Polyoxadiazolen und/oder Flüssigkristallpolymeren und/oder Polyisoprenen und/oder Polybutadienen und/oder Polyisobutylenen und/oder Polychloroprenen und/oder Polyacrylaten und/oder Polyglucanen und/oder Polyurethanen und/oder Polysulfiden und/oder Silikonen und/oder Polyvinylchloriden und/oder Epxoidharzen und/oder Polyetherestern und/oder Ethylen-Propylen-Copolymeren und/oder Styrol-Butadien-Copolymeren und/oder Acrylnitril-Butadien-Copolymeren und/oder Ispren-Isobutylen-Copolymeren und/oder Mischungen und/oder Derivaten dieser Materialien und dass die Querschnittsbreite w des Bandes (9) der Bedingung 100 µm < w < 30000 µm, bevorzugt 300 µm < w < 10000 µm, genügt, und dass das Verhältnis von Querschnittsbreite w zu Querschnittshöhe h die Bedingung 4000 > w/h > 1.5, insbesondere 500 > w/h > 10, insbesondere 200 > w/h > 40, erfüllt.

2. Festigkeitsträgerlage (13) nach Anspruch 1, **dadurch gekennzeichnet, dass** das Band (9) aus genau einer Folie (11) gebildet ist.

3. Festigkeitsträgerlage (13) nach zumindest einem der vorangehenden Ansprüche, **dadurch gekennzeichnet, dass** das Band (9) aus einer Folie aus Polyester (PE), insbesondere aus Polyethylennaphthalat (PEN) oder Polyethylenterephthalat (PET), gebildet ist.

4. Festigkeitsträgerlage (13) nach zumindest einem der vorangehenden Ansprüche, **dadurch gekennzeichnet, dass** das Band (9) ein Laminat enthaltend mindestens eine Folie (11) sowie mindestens eine flächige Schicht (12), insbesondere ein Laminat enthaltend mindestens eine Polyesterfolie oder eine Polyimidfolie sowie mindestens eine flächige Schicht (12) aus Aramidpapier, ist.

5. Festigkeitsträgerlage (13) nach zumindest einem der vorangehenden Ansprüche, **dadurch gekennzeichnet, dass** die Querschnittshöhe h des Bandes (9) der Bedingung 10 µm < h < 1500 µm, vorzugsweise 30 µm < h < 800 µm, bevorzugt 40 µm < h < 400 µm, entspricht.

6. Festigkeitsträgerlage (13) nach zumindest einem der vorangehenden Ansprüche, **dadurch gekennzeichnet, dass** der Festigkeitsträger mit einer Haftimprägnierung zur Gewährleistung der Haftung des Festigkeitsträgers zum elastomeren Material (10) versehen ist.

7. Festigkeitsträgerlage (13) nach zumindest einem der vorangehenden Ansprüche, **dadurch gekennzeichnet, dass** die Festigkeitsträgerlage (13) zumindest zwei in Material und/oder Aufbau unterschiedliche Festigkeitsträger aufweist.

8. Fahrzeugluftreifen, enthaltend zumindest eine Festigkeitsträgerlage (13) der Gürtelbandage (8) und/oder der Karkasse (2) und/oder der Wulstverstärkung gemäß zumindest einem der Ansprüche 1 bis 7.

## Claims

1. Reinforcing layer (13) for pneumatic vehicle tyres, wherein the reinforcing layer (13) has at least one reinforcing element, which is embedded in the elastomeric material (10), wherein the reinforcing element is a band (9), the cross section of which satisfies the condition h < w, where h defines the cross-sectional height and w defines the cross-sectional width of the band (9), wherein the band (9) comprises a film (11), wherein the film (11) extends over the entire area of extent of the band (9), wherein the film (11) consists of a non-metallic material, and wherein the band (9) is arranged in the reinforcing layer (13) in such a way that the direction of extent of w is aligned approximately parallel to the planar extent of the reinforcing layer (13),
**characterized in that**
the reinforcing layer (13) is a reinforcing layer of the breaker belt bandage (7) and/or of the carcass (2) and/or of the bead reinforcement of a pneumatic vehicle tyre, **in that** the non-metallic material of the film (11) is included in the group consisting of polyesters and/or polyether ketones and/or polyketones and/or rayon and/or viscose and/or natural fibre materials and/or glass and/or carbon and/or polyoxadiazoles and/or liquid crystal polymers and/or polyisoprenes and/or polybutadienes and/or polyisobutylenes and/or polychloroprenes and/or polyacrylates and/or polyglucans and/or polyurethanes and/or polysulphides and/or silicones and/or polyvinylchlorides and/or epoxy resins and/or polyether esters and/or ethylene-propylene copolymers and/or styrene-butadiene copolymers and/or acrylonitrile-butadiene copolymers and/or isoprene-isobutylene copolymers and/or mixtures and/or derivatives of these materials and **in that** the cross-sectional width w of the band (9) satisfies the condition 100 µm < w < 30 000 µm, with preference 300 µm < w < 10 000 µm, and **in that** the ratio of the cross-sectional width w to the cross-sectional height h satisfies the condition 4000 > w/h >1.5, in particular 500 > w/h > 10, in particular 200 > w/h > 40.

2. Reinforcing layer (13) according to Claim 1, **characterized in that** the band (9) is formed by precisely one film (11).

3. Reinforcing layer (13) according to at least one of the preceding claims, **characterized in that** the band (9) is formed by a film of polyester (PE), in particular of polyethylene naphthalate (PEN), or polyethylene terephthalate (PET).

4. Reinforcing layer (13) according to at least one of the preceding claims, **characterized in that** the band (9) is a laminate including at least one film (11) and also at least one planar layer (12), in particular a laminate including at least one polyester film or a polyimide film and also at least one planar layer (12) of aramid paper.

5. Reinforcing layer (13) according to at least one of the preceding claims, **characterized in that** the cross-sectional height h of the band (9) satisfies the condition 10 µm < h < 1500 µm, preferably 30 µm < h < 800 µm, with preference 40 µm < h < 400 µm.

6. Reinforcing layer (13) according to at least one of the preceding claims, **characterized in that** the reinforcing element is provided with an adhesive impregnation to ensure the adhesive bonding of the reinforcing element to the elastomeric material (10).

7. Reinforcing layer (13) according to at least one of the preceding claims, **characterized in that** the reinforcing layer (13) has at least two reinforcing elements differing in material and/or structure.

8. Pneumatic vehicle tyre, containing at least one reinforcing layer (13) of the breaker belt bandage (8) and/or of the carcass (2) and/or of the bead reinforcement according to at least one of Claims 1 to 7.

## Revendications

1. Couche de renfort (13) pour pneus de véhicule, dans laquelle la couche de renfort (13) présente au moins un renfort, qui est noyé dans un matériau élastomère (10), dans laquelle le renfort est une bande (9), dont la section transversale correspond à la condition h < w, dans laquelle h définit la hauteur de section transversale et w la largeur de section transversale de la bande (9), dans laquelle la bande (9) présente une feuille (11), dans laquelle la feuille (11) s'étend sur toute la surface d'extension de la bande (9), dans laquelle la feuille (11) se compose d'un matériau non métallique et dans laquelle la bande (9) est agencée dans la couche de renfort (13) de telle manière que la direction d'extension de w soit orientée environ parallèlement à l'extension superficielle de la couche de renfort (13), **caractérisée en ce que** la couche de renfort (13) est une couche de renfort du bandage de ceinture (7) et/ou de la carcasse (2) et/ou du renfort de talon d'un pneu de véhicule, **en ce que** le matériau non métallique de la feuille (11) est compris dans le groupe composé de polyesters et/ou de polyéthercétones et/ou de polycétones et/ou de rayonne et/ou de viscose et/ou de matières de fibres naturelles et/ou de verre et/ou de carbone et/ou de polyoxadiazoles et/ou de polymères à cristaux liquides et/ou de polyisoprènes et/ou de polybutadiènes et/ou de polyisobutylènes et/ou de polychloroprènes et/ou de polyacrylates et/ou de polyglucanes et/ou de polyuréthanes et/ou de polysulfures et/ou de silicones et/ou de chlorures de polyvinyle et/ou de résines époxy et/ou de polyétheresters et/ou de copolymères éthylène-propylène et/ou de copolymères styrène-butadiène et/ou de copolymères acrylonitrile-butadiène et/ou de copolymères isoprène-isobutylène et/ou de mélanges et/ou de dérivés de ces matériaux et **en ce que** la largeur de section transversale w de la bande (9) satisfait la condition 100 µm < w <30000 µm, de préférence 300 µm < w < 10000 µm, et **en ce que** le rapport de la largeur de section transversale w à la hauteur de section transversale h remplit la condition 4000 > w/h > 1,5, en particulier 500 > w/h > 10, en particulier 200 > w/h > 40.

2. Couche de renfort (13) selon la revendication 1, **caractérisée en ce que** la bande (9) est formée exactement par une feuille (11).

3. Couche de renfort (13) selon au moins une des revendications précédentes, **caractérisée en ce que** la bande (9) est formée d'une feuille de polyester (PE), en particulier de polyéthylène naphtalate (PEN) ou de polyéthylène téréphtalate (PET).

4. Couche de renfort (13) selon au moins une des revendications précédentes, **caractérisée en ce que** la bande (9) est un stratifié contenant au moins une feuille (11) ainsi qu'au moins une couche superficielle (12), en particulier un stratifié contenant au moins une feuille de polyester ou une feuille de polyimide ainsi qu'au moins une couche superficielle (12) en papier d'aramide.

5. Couche de renfort (13) selon au moins une des revendications précédentes, **caractérisée en ce que** la hauteur de section transversale h de la bande (9) correspond à la condition 10 µm < h < 1500 µm, de préférence 30 µm < h < 800 µm, de préférence encore 40 µm < h < 400 µm.

6. Couche de renfort (13) selon au moins une des revendications précédentes, **caractérisée en ce que** le renfort est muni d'une imprégnation d'accrochage pour garantir l'adhérence du renfort au matériau élastomère (10).

7. Couche de renfort (13) selon au moins une des revendications précédentes, **caractérisée en ce que** la couche de renfort (13) présente au moins deux renforts différents au niveau du matériau et/ou de la structure.

8. Pneu de véhicule, contenant au moins une couche de renfort (13) du bandage de ceinture (8) et/ou de la carcasse (2) et/ou du renfort de talon selon au moins une des revendications 1 à 7.
